(19) Europäisches Patentamt
European Patent Office
Office européen des brevets

(11) EP 1 898 287 A1

(12) **EUROPÄISCHE PATENTANMELDUNG**

(43) Veröffentlichungstag:
**12.03.2008 Patentblatt 2008/11**

(51) Int Cl.:
***G05B 19/418*** *(2006.01)*

(21) Anmeldenummer: 06018582.4

(22) Anmeldetag: **05.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder:
• **Schiff, Andreas, Dr.**
  **88097 Eriskirch (DE)**
• **Wiesgickl, Bernhard**
  **92249 Vilseck (DE)**

(54) **ASI-Netzwerk für explosionsgefährdete Bereiche**

(57) Es ist ein ASI-Netzwerk für explosionsgefährdete Bereiche mit einer Mehrzahl von Kommunikationsteilnehmern (6-8) vorgesehen, die als Master oder als Sensoren und/oder als Aktuatoren ausgebildet über jeweils ein Interface an eine Busleitung (4) angeschlossen sind und die vorteilhafterweise über mindestens ein an der Busleitung angeschlossenes Netzteil mit Strom versorgt werden. Dabei weist die Busleitung (4) eine Anzahl von zwischen zwei der Kommunikationsteilnehmer (6-8) verschalteten Strombegrenzungswiderstände (R310,R311, R312,R313) auf, die im Kurzschlussfall einen Busfehlerstrom ($I_F$) über die Busleitung (4) begrenzen. Zusätzlich wird mittels Zenerdioden die Spannung auf dem Bus (Busfehlerspannung) begrenzt.

FIG 3

EP 1 898 287 A1

**Beschreibung**

Die Erfindung betrifft ein ASI-Netzwerk für explosionsgefährdete Bereiche.

Unter dem Begriff ASI, "Aktuator-Sensor-Interface für die Automation" wird ein System aus einer Busleitung mit daran angeschlossenen Kommunikationsteilnehmern verstanden.

In dem Buch Werner Kriesel, Otto W. Madelung (Hrsg.): ASI - das Aktuator-Sensor-Interface für die Automation, Hansa-Verlag, München, Wien, 1994, wird im Abschnitt 6.3 zum Thema "Repeater und Netzerweiterungen" die Möglichkeit beschrieben, derartige ASI-Netzwerke über größere Entfernungen zu erstrecken.

ASI versteht sich als "Interface", nämlich als Schnittstelle für Sensoren und Aktuatoren, die an eine Mikrorechnersteuerung angeschlossen sind. ASI ist daher auch kein Feldbus, sondern speziell für den Informationsaustausch von Sensoren und Aktuatoren mit einer Steuerung konzipiert worden und liegt damit unterhalb dessen, was heute als "Feldbus-Ebene" bezeichnet wird.

Kernstück von ASI ist ein Slave-Chip als ASIC (anwendungsspezifischer Schaltkreis), mit dem die Sensoren/ Aktuatoren an die ASI-Busleitung digital und zugleich kostengünstig angekoppelt werden. In jedem Abfragezyklus werden 6 Bit Netto-Informationen vom Master zu jedem Slave und 4 Bit zurück seriell übertragen. Sie können als Ein- oder als Ausgangsdaten genutzt werden. Die ASI-Leitung ist im Allgemeinen ein ungeschirmtes Zwei-Leiter-Flachbandkabel oder ein Standard-Rundkabel, über das gleichzeitig Signale und Energie übertragen werden können.

Für eine Verlängerung der Übertragungsstrecke ist ein Lösungsvorschlag mit Abschluss-Impedanzen vorgeschlagen (DE-GM 202004004637.7).

In zahlreichen Applikationen, z. B. in der Transport- und Fördertechnik sind mit AS-Interface größere Entfernungen bis zu mehreren Kilometern überbrückbar. Eine typische Applikation ist etwa die Überwachung von Förderbändern in Steinbrüchen. Hier ist es Aufgabe, mit Hilfe von Schlupfwächtern zu überwachen, ob einzelne Bänder der Förderstrecke überlastet sind. Ist dies der Fall, so müssen einzelne oder alle Bänder sofort stillgesetzt werden, um größere Schäden zu verhindern. Ferner sollen NOT-Ausschalter in regelmäßigen Abständen montiert werden können. Auch in der Prozess- und Verfahrenstechnik und der Gebäudeautomatisierung sind oft größere Entfernungen zwischen einzelnen Feldgeräten an einem Bus zu überbrücken.

Aus der WO 2006/000585 A1 ist ein Netzteil eines ASI-Netzes mit einer Datenentkopplung in Richtung auf die Busleitung vorgesehen. Jeder Kommunikationsteilnehmer ist über eine Anpassschaltung mit der Busleitung verbunden. Die Datenentkopplung vor dem Netzteil (Konstantspannungsquelle) besteht aus zwei Drosseln mit einer Induktivität von mehr als 2000μH. Die Impedanz der Datenentkopplung ist damit deutlich größer als die Abschlussimpedanz der Leitung.

Aus der WO 2006/000585 A1 ist weiterhin bekannt, dass die Spannungsversorgung des gesamten Netzes über die Busleitung erfolgen kann. Das Netzteil liefert die Versorgungsspannung von z. B. 30V DC in das Netzwerk. Dem Netzteil vorgeschaltet ist eine Datenentkopplung, die aus zwei Induktivitäten von je ca. 2000 μH bis 5000 μH besteht. Es können zur besseren Stützung der DC-Spannung je nach Bedarf auch mehrere dieser Netzteile mit Datenentkopplung entlang der Leitung vorgesehen werden. Bei geeigneter Auslegung der Anpassschaltungen sind auch andere (höhere) Spannungen möglich, um den Spannungsabfall entlang der Leitung zu kompensieren bzw. zu reduzieren.

Die Anpassschaltung der WO 2006/00585 A1 besteht aus den folgenden Komponenten:

- einem Anschluss an das bis zu 4 km lange Netzwerk und
- einem Anschluss für die AS-Interface-Teilnehmer
- einer DC-Versorgung der angeschlossenen AS-Interface-Teilnehmer (optional)
- einer AS-Interface-Datenentkopplung, bestehend aus je einer 50μH Drossel parallel zu 39 Ohm (optional),
- einer Schaltung, die die auf dem Netzwerk übertragenen Spannungspulse in Strompulse auf der AS-Interface-Teilnehmerseite und
- einer Schaltung, die die auf der AS-Interface-Teilnehmerseite erzeugten Strompulse 1:1 in Spannungspulse auf der Netzwerkseite überträgt.

Die Anpassschaltung der WO 2006/00585 A1 kann bei Bedarf auch vom Netzwerk galvanisch getrennt ausgeführt werden. Anstelle der einfachen DC-Versorgung der angeschlossenen AS-Interface-Teilnehmer wird dann ein DC/DC-Wandler mit galvanischer Trennung eingesetzt. Die Spannungs-/Stromwandler können beispielsweise mit Hilfe eines Transformators oder eines analog arbeitenden Optokopplers ebenfalls galvanisch getrennt ausgeführt werden.

Da die lange Busleitung durch das Kommunikationsverfahren relativ unempfindlich gegen kapazitive Last ist, können - wo erforderlich - handelsübliche Überspannungs-Schutzreinrichtungen vorgesehen werden, wenn diese eine Kapazität von <5nF aufweisen. Erst bei noch größeren Kapazitäten würden unerwünschte Reflexionen von der Stelle ausgehen, an der die Überspannungs-Schutzeinrichtung installiert ist.

Gemäß der WO 2006/000585 kann das ASI-Netzwerk in explosionsgefährdeten Bereichen verwendet werden, in denen erhöhte Anforderungen zum Schutz vor möglichen Explosionen gestellt werden. Gerade bei der Prozessautomatisierung werden sich immer wieder Bereiche finden, in denen eine explosionsfähige Atmosphäre aus Staub, Gas, Dampf oder Nebel entstehen kann.

Die Figuren 1 und 2 zeigen ein ASI-Netzwerk nach dem Stand der Technik wie dieser in der WO 2006/00585 A1 offenbart ist.

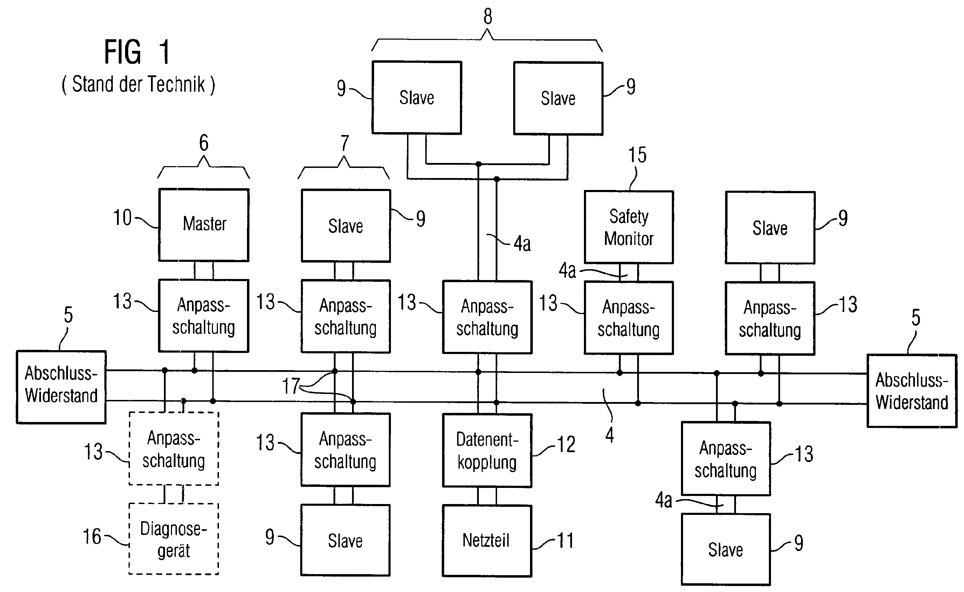

Gemäß FIG 1 ist vorgesehen, dass ein Netzteil 11 über eine Datenentkopplung 12 an die Busleitung 4 angeschlossen ist. Die einzelnen Kommunikationsteilnehmer 6, 7, 8 können sehr unterschiedlich sein. So besteht der Kommunikationsteilnehmer 6 beispielsweise aus einem Master 10, während der Kommunikationsteilnehmer 7 aus einem Slave 9 besteht und der Kommunikationsteilnehmer 8 aus zwei parallel geschalteten Slaves 9.

Ebenso können weitere Kommunikationsteilnehmer definiert werden, wobei z.B. ein Sicherheitsmonitor 15 vorhanden ist und ein anderer Kommunikationsteilnehmer aus einem Diagnosegerät 16 besteht. Jeder Kommunikationsteilnehmer 6, 7, 8 ist mit einer Anpassschaltung 13 auf die Busleitung 4 angeschaltet. Die Busleitung 4 ist durch zwei jeweils an einem Ende angeordnete Abschlusswiderstände 5 abgeschlossen. Irgendwo auf der Busleitung 4 ist ein Netzteil 11 angeordnet. Dabei kommt es nicht auf den Ort des Netzteils an, weil dieses von der Busleitung 4 über den Datenentkoppler 12 entkoppelt ist.

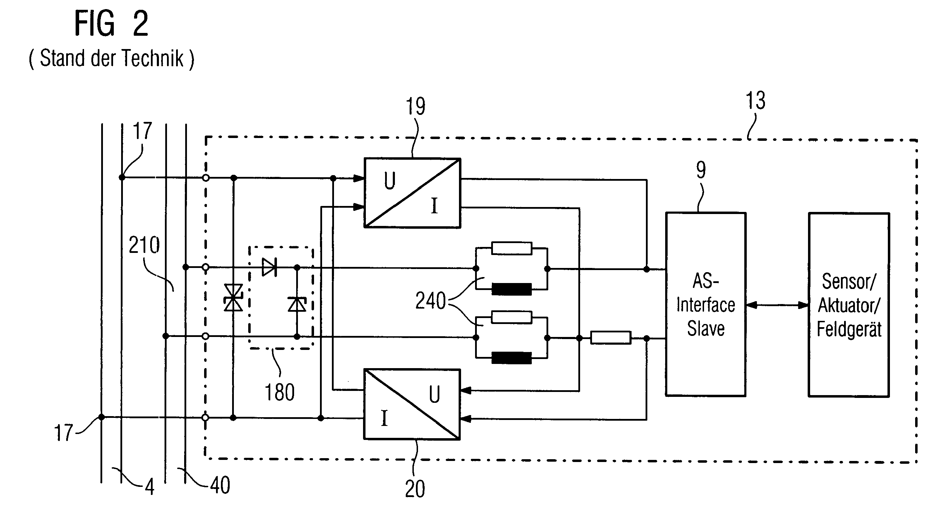

In FIG 2 ist eine Anpassschaltung 13 des Standes der Technik dargestellt, die zusammen mit dem an dieser Anpassschaltung 13 angeschlossenen Slave 9 besonders für explosionsgefährdete Bereiche geeignet ist. Teile des ASI-Netzwerkes, insbesondere deren elektrische Betriebsmittel wie zum Beispiel die Slaves 9 mit den Sensoren, Aktuatoren oder Feldgeräten, befinden sich häufig in solchen explosionsgefährdeten Bereichen. In diesen so genannten Ex-Bereichen sind häufig Stäube, Gase oder Dämpfe vorzufinden die durch elektrische Funken des darin befindlichen Betriebsmittels unbeabsichtigt zur Explosion gebracht werden könnten.

Die Norm EN 50014 enthält dazu allgemeine Bestimmungen für die Bauart und Prüfung dieser elektrischen Betriebsmittel die für solche explosionsgefährdete Bereiche bestimmt sind. ASI-Netzwerke für die gemischte Installation müssen somit beispielsweise in der Zündschutzart Ex-e verlegt werden. Die Zündschutzart Ex-e (erhöhte Sicherheit), die durch die Norm EN 50012 festgelegt ist, erfordert dazu zusätzliche Maßnahmen zur Vermeidung von Zündfunken. Bei Slaves, die nach der Zündschutzart Ex-d (drucksichere Kapselung) nach der Norm EN 50018 ausgeführt sind, sind zusätzliche Zenerbarrieren zur sicheren Speisung vorgesehen. Weitere Zündschutzarten, wie beispielsweise der Eigensicherheit nach EN 50020 können ebenso verwendet werden.

In der FIG 2 sind zu den Drosselschaltungen 240 ergänzend Dioden 180 vorgesehen über die die Anpassschaltung 13 an eine sichere Speisung 40 angeschlossen ist. Das an der Stelle 210 mit der Anpassschaltung 13 verbundene Netzwerk zur sicheren Speisung 40 ist dabei räumlich wie die Busleitung 4 angeordnet und versorgt die verschiedenen Slaves 9 des ASI- Netzwerkes mit der notwendigen Versorgungsspannung. Die eigentliche "sichere Speisung" befindet sich im Nicht-Ex-Bereich, während sich die einzelnen Slaves 9 im Ex- aber auch in Nicht-Ex-Bereichen befinden können. Weiterhin ist ein Spannungsstromwandler 19 und ein Stromspannungswandler 20 vorgesehen.

Der Erfindung liegt die Aufgabe zugrunde, ein ASI-Netzwerk für explosionsgefährdete Bereiche für eine Vielzahl von Kommunikationsteilnehmern weiter zu entwickeln.

Diese Aufgabe wird gemäß der Erfindung mit einem ASI-Netzwerk mit den Merkmalen des Anspruchs 1 gelöst. Bevorzugte Weiterbildungen der Erfindung sind Gegenstand von Unteransprüchen.

Demzufolge ist ein ASI-Netzwerk für explosionsgefährdete Bereiche mit einer Mehrzahl von Kommunikationsteilnehmern vorgesehen. Ein Kommunikationsteilnehmer kann als Master oder als Sensor und/oder als Aktuator ausgebildet sein. Jeder Kommunikationsteilnehmer ist jeweils über ein Interface an eine Busleitung angeschlossen und wird vorzugsweise über mindestens ein an der Busleitung angeschlossenes Netzteil oder über eine separate Zuleitung mit Strom versorgt.

Die Busleitung weist eine Anzahl von zwischen zwei der Kommunikationsteilnehmer verschalteten Strombegrenzungswiderständen auf. Um den Strom zu begrenzen ist dabei zumindest ein Strombegrenzungswiderstand nötig. Vorteilhafterweise wird jedoch in jedem Kabel der Busleitung zumindest ein Strombegrenzungswiderstand vorgesehen. Jeder Strombegrenzungswiderstand ist dazu ausgebildet im Kurzschlussfall einen Busfehlerstrom über die Busleitung zu begrenzen. Der Kurzschlussfall ist dabei ein möglicher Fehler des ASI-Netzwerkes in einem explosionsgefährdeten Bereich.

Unter einem Strombegrenzungswiderstand werden dabei ebenso rein ohmsche Widerstände als auch nichtlineare oder aktive Widerstände, wie beispielsweise ein Source-Drain-Widerstand eines entsprechend angesteuerten Feldeffekttransistors, verstanden. Verschiedene Widerstandsarten können ebenfalls miteinander zu einer Strombegrenzung kombiniert werden. Vorteilhafterweise werden jedoch ohmsche Widerstände mit einer zu vernachlässigenden parasitären Kapazität verwendet.

Vorteilhafterweise wird jeder Strombegrenzungswiderstand mit der Busleitung verbunden. Hierzu wird beispielsweise die Busleitung in einer Aufnahme des Strombegrenzungswiderstands befestigt und beidseitig einer Unterbrechung der Busleitung kontaktiert. Zur Unterbrechung muss die Busleitung aufgetrennt sein, wobei die Trennstelle vorteilhafterweise innerhalb eines Gehäuses des Strombegrenzungswiderstands geschützt ist.

Gemäß einer bevorzugten Weiterbildung der Erfindung ist eine Anzahl von Zenerdioden vorgesehen, wobei bevorzugt zumindest eine Zehnerdiode mit einem Kabel der Busleitung direkt verbunden ist. Eine über die Strombegrenzungswiderstände im Kurzschlussfall abfallende Busfehlerspannung ist vorteilhafterweise durch die Anzahl von mit der Busleitung verbundenen Zenerdioden begrenzt. Bevorzugt weist jeder Kommunikationsteilnehmer des ASI-Netzwerkes zwei Zenerdioden auf, die antiseriell verschaltet mit zwei Kabeln der Busleitung verbunden sind.

Die jeweilige Zenerdiode ist vorteilhafterweise als separates Bauelement auf einem Schaltungsträger verschaltet und dabei nicht integraler Bestandteil einer Schaltung auf einem Halbleiterchip.

Vorteilhafterweise ist jedoch zusätzlich ein Halbleiterchip mit einer integrierten Schaltung vorgesehen, die als anwendungsspezifischer Schaltkreis (ASIC) ausgebildet sein kann. Vorteilhafterweise ist dieser ASIC für eine Versorgungsspannung von nominal 12V ausgelegt, so dass dieser auch in einer Kraftfahrzeugelektronik eingesetzt werden kann.

Gemäß einer anderen vorteilhaften Ausgestaltung ist vorgesehen, dass eine Kommunikationsteilnehmeranzahl zwischen zwei Strombegrenzungswiderständen oder einem Strombegrenzungswiderstand und einem Abschlusswiderstand der Busleitung kleiner als 22 ist, um den vorgeschriebenen Anforderungen für explosionsgefährdete Räume zu entsprechen.

In einer Weiterbildung ist vorgesehen, dass jeder Strombegrenzungswiderstand derart dimensioniert ist, dass eine Signal-Reflexion an diesem Strombegrenzungswiderstand eine Kommunikation zwischen den Kommunikationsteilnehmern nicht beeinflusst. Reflexionen an einem Strombegrenzungswiderstand sind bezüglich der Auslegung des ASI-Netzwerkes daher zu vernachlässigen.

Die Topologie des Netzwerkes wird vorzugsweise auf eine Linienstruktur mit kurzen Abzweigen beschränkt. Es sind vorteilhafterweise zwei Abschlusswiderstände an beiden Enden der Busleitung von je ca. 120 Ohm (in Reihe mit einer Kapazität von ca. 500nF) vorgesehen. Die Abschlusswiderstände werden in ihrer Größe so gewählt, dass sie die Busleitung optimal abschließen und Reflexionen vollständig unterdrücken. Zwischen das Netzwerk und die Kommunikationsteilnehmer (also Master, Slave, Safety-Monitor, Diagnosegeräte und dgl.) werden vorteilhafterweise entweder Anpassschaltungen zwischengeschaltet oder es wird eine Empfängerschaltung des Slaves modifiziert.

Die wichtigen Vorteile von ASI bleiben erhalten:

- Alle Standard-Komponenten können wie bisher ohne Modifikation weiter verwendet werden.
- Jede Komponente des ASI-Systems kann an einem beliebigen Punkt des Netzwerkes auch benachbart zu einem Strombegrenzungswiderstand angeschlossen werden.
- Das Kabel muss lediglich für die Strombegrenzungswiderstände aufgetrennt werden.
- Die Energieversorgung der Slaves und die Kommunikation zwischen Master und Slaves finden kann auf den gleichen zwei Busleitungen stattfinden.

Ausführungsbeispiele der Erfindung werden im Folgenden anhand von Figuren näher erläutert. Dabei zeigen

FIG 1     ein ASI-Netzwerk des Standes der Technik;

FIG 2     ein eines ASI-Netzwerkes des Standes der Technik;

FIG 3     ein ASI-Netzwerk mit Strombegrenzungswiderständen; und

FIG 4     eine Simulationsumgebung für ein ASI-Netzwerk mit Strombegrenzungswiderständen.

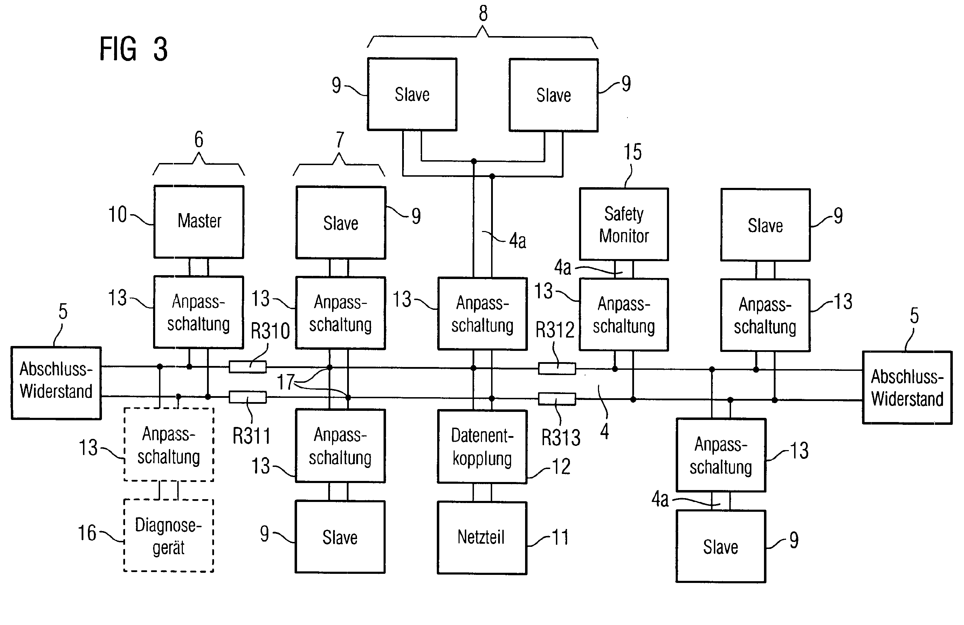

Die FIG 3 zeigt ein ASI-Netzwerk mit mehreren Kommunikationsteilnehmern 6, 7, 8, 9, 11, 15, 16, die mit der Busleitung 4 verbunden sind. Im Unterschied zum ASI-Netzwerk des Standes der Technik weist die Busleitung 4 vier Strombegrenzungswiderstände R310, R311, R312 und R313 auf, die zwischen Ankopplungen 17 der Kommunikationsteilnehmer 6, 7, 8, 9, 11, 15, 16 in Kabeln der Busleitung 4 eingefügt sind. Die Kabel der Busleitung 4 sind hierzu an der Stelle der Strombegrenzungswiderstände R310, R311, R312 und R313 aufgetrennt.

Die Strombegrenzungswiderstände R310, R311, R312 und R313 der FIG 3 teilen das ASI-Netzwerk in drei zueinander benachbarte Abschnitte, respektive gemäß FIG 3 in einen rechten Bereich, einen mittleren Bereich und einen linken Bereich. Angenommen im linken Bereich fällt das Diagnosegerät 16 aus und erzeugt in einer explosionsgefährdeten Umgebung einen Kurzschluss, so ist der Strom, der von Kommunikationsteilnehmern 7, 8, 9, 11 des mittleren Bereiches und des rechten Bereiches in den linken Bereich des ASI-Netzwerkes fließt durch die Strombegrenzungswiderstände R310 und R311 begrenzt. Dabei führen für den rechten Bereich des ASI-Netzwerkes die Strombegrenzungswiderstände R312 und R313 zu einer weiteren Reduktion des Stromflusses.

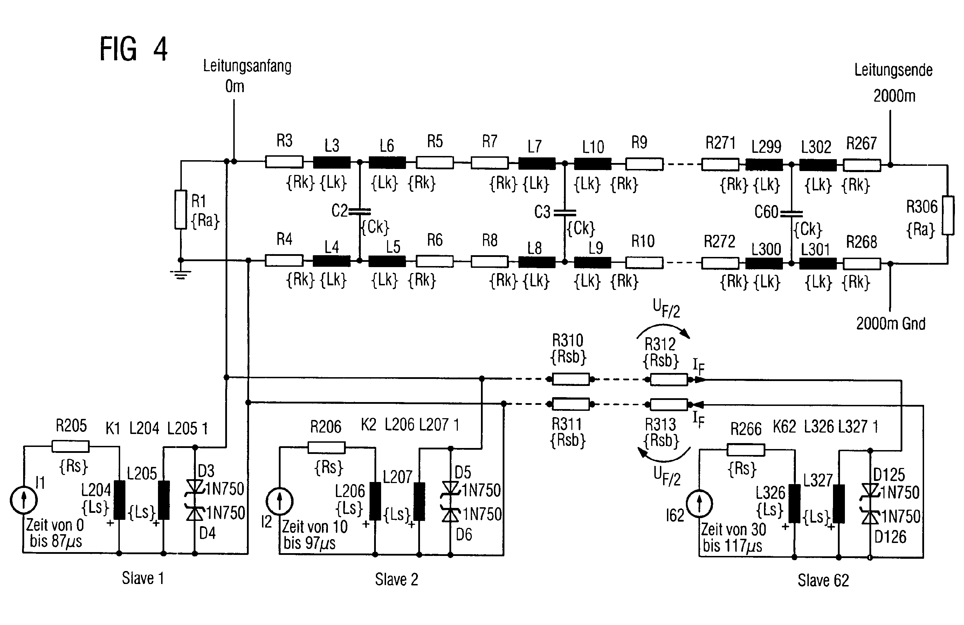

FIG 4 zeigt eine Simulationsumgebung zur Auslegung des ASI-Netzwerkes für einen schlimmst möglichen Fall eines Kurzschlusses, bei dem sämtliche Kommunikationsteilnehmer an demselben Punkt an das ASI-(Teil-)Netzwerk angeschlossen sind. Dabei ist insbesondere der Fall zu betrachten, dass im mittleren Bereich des ASI-Netzwerkes ein Kurzschluss auftritt. Der obere Bereich des in FIG 4 dargestellten Schaltkreises simuliert die Busleitung 4 des ASI-Netzwerkes. Im vorliegenden Simulationsfall für die theoretisch ungünstigsten Randbedingungen sind sämtliche Kommunikationsteilnehmer am Ort null Meter der Busleitung 4 angeschlossen.

Der in FIG 4 simulierte Fall ist der, dass mehr als 33 Kommunikationsteilnehmer, nämlich im Ausführungsbeispiel der FIG 4 dreiundsechzig Kommunikationsteilnehmer an der Busleitung angeschlossen sind. Dabei werden bei einem ASI-Netzwerk eine große Vielzahl einfacher Teilnehmer, wie zum Beispiel Temperatur- und Drucksensoren, Füllstandssensoren, Stellventile, Befehls- und Meldegeräte und ähnlich Feldgeräte angeschlossen. Es muss also in FIG 4 simuliert werden, dass im Fehlerfall alle Kommunikationsteilnehmer gleichzeitig Informationen senden und zusätzlich ein Kurzschluss auf der Busleitung existiert. Die möglichen Ströme, die durch die Annahme von beliebig vielen nicht zählbaren Fehlern und einem zählbaren Fehler entstehen können, gilt es so zu reduzieren, dass die Grenzbedingungen für den Einsatz in einer Ex-Zone 1 nicht überschritten werden.

Die Strombegrenzungswiderstände R310, R311, R312 und R313 beeinträchtigen die Kommunikation zwischen den Teilnehmern nur vernachlässigbar. Sie sind aber in Verbindung mit den Zenerdioden D3 bis D126 in der Lage, den kritischen Kurzschlussstrom deutlich abzusenken.

Eine Errichtungsvorschrift soll festlegen, dass bei Einsatz von mehr als einem Drittel der maximal möglichen Zahl von Teilnehmern ein Strombegrenzungswiderstandspaar R310 und R311 beziehungsweise R312 und R313 zwischen zu schalten ist. Werden mehr als zweiundvierzig Teilnehmer an das ASI-Netzwerk angeschlossen, müssen zwei Strombegrenzungswiderstandspaar R310 und R311 sowie R312 und R313 installiert werden, so dass sich in jedem von Strombegrenzungswiderständen abgegrenzten ASI-Teilnetzwerk maximal ein drittel aller Teilnehmer befinden.

Angenommen es wären alle Teilnehmer parallel und ohne Zwischenschaltung von den erfindungsgemäßen Strombegrenzungswiderständen R310 und R311 beziehungsweise R312 und R313 an das Buskabel 4 angeschlossen und träten die angenommenen Fehler (alle Slave senden gleichzeitig, Kurzschluss der Busleitung 4) auf, so ergäbe sich ein maximal möglicher Strom:

$$I_{max} = 63 \times 70 \text{ mA} = 4,41 \text{ A}$$

Dieser Wert ist zu groß.

Die Teilnehmer sind dabei in der FIG 4 vereinfacht jeweils durch eine Stromquelle $I_1$ bis $I_{62}$ jeweils durch einen Widerstand R205 bis R266, jeweils durch zwei gekoppelte Induktivitäten L204/L205 bis L326/L327 und jeweils durch zwei Zenerdioden D3/D4 bis D125/D126 simuliert. Wird nun ein Kurzschluss der Busleitung 4 zwischen Strombegrenzungswiderstandspaaren R310/R311 und R312/R313 angenommen (dies stellt den kritischsten Fall dar), dann fließen in diesem ASI-Teilnetzwerk zunächst die Kurzschlussströme der dort angeschlossenen Teilnehmer über die Kurzschlussstelle.

Dies ist im betrachteten Beispiel der FIG 4:

$$I_{max1} = 21 \times 70 \text{ mA} = 1,47 \text{ A}$$

Mögliche weitere auftretende Widerstände, wie zum Beispiel der Schleifenwiderstand des Kabels oder Widerstände der Kontaktstellen, können in dieser Analyse vernachlässigt werden.

Zusätzlich zu $I_{max1}$ kommen aus jedem der benachbarten ASI-Teilnetzwerke ein Beitrag hinzu der durch die Dimensionierung der spannungsbegrenzenden Zenerdioden D3 bis D126, welche die Spannung auf der Busleitung auf 5,5 V begrenzen, und durch das jeweilige Strombegrenzungswiderstandspaar R310/R311 beziehungsweise R312/R313 von 2 x 5 Ohm bestimmt ist. Der Busfehlerstrom $I_F$ ist dabei gegeben durch:

$$I_F = U_F / (R312 + R313) = 5,5 \text{ V} / (5 \text{ Ohm} + 5 \text{ Ohm}) = 0,55 \text{ A}$$

Zusammen ergibt sich also:

$$I_{max} = I_{max1} + 2 \text{ x } I_F = 1,47 \text{ A} + 2 \text{ x } 0,55 \text{ A} = 2,57 \text{ A}$$

Dieser Wert ist für eine Ex-Zone ausreichend niedrig.

Die Vorteile dieses Ausführungsbeispiels sind:

- Das ASI-Netzwerk für den Ex-Bereich kann durch die zusätzliche Einführung von den Strombegrenzungswiderständen preiswert um zusätzlich Teilnehmer erweitert werden. Dies erhöht die Wirtschaftlichkeit.
- Durch die Strombegrenzungswiderstände wird die Signalübertragung nur vernachlässigbar behindert. Die Errichtung des ASI-Netzwerkes im Ex-Bereich wird dadurch nicht wesentlich erschwert.

**Patentansprüche**

1. ASI-Netzwerk für explosionsgefährdete Bereiche mit einer Mehrzahl von Kommunikationsteilnehmern (6-8), die als Master oder als Sensoren und/oder als Aktuatoren ausgebildet über jeweils ein Interface an eine Busleitung (4) angeschlossen sind,
**dadurch gekennzeichnet, dass** die Busleitung (4) eine Anzahl von zwischen zwei der Kommunikationsteilnehmer (6-8) verschalteten Strombegrenzungswiderstände (R310, R311, R312, R313) aufweist, die im Kurzschlussfall einen Busfehlerstrom (I$_F$) über die Busleitung (4) begrenzen.

2. ASI-Netzwerk nach Anspruch 1,
**dadurch gekennzeichnet, dass** eine über die Strombegrenzungswiderstände (R310, R311, R312, R313) im Kurzschlussfall abfallende Busfehlerspannung (U$_F$) durch eine Anzahl von mit der Busleitung (4) verbundenen Zenerdioden (D3, D4, D5, D6, D125, D126) begrenzt ist.

3. ASI-Netzwerk nach einem der vorhergehenden Ansprüche,
**dadurch gekennzeichnet, dass** eine Kommunikationsteilnehmeranzahl zwischen zwei Strombegrenzungswiderständen (R310, R311, R312, R313) oder einem Strombegrenzungswiderstand (R310, R311, R312, R313) und einem Abschlusswiderstand (R1, R308, 5) kleiner als 22 ist.

4. ASI-Netzwerk nach einem der vorhergehenden Ansprüche,
**dadurch gekennzeichnet, dass** jeder Strombegrenzungswiderstand (R310, R311, R312, R313) derart dimensioniert ist, dass eine Signal-Reflexion an diesem Strombegrenzungswiderstand (R310, R311, R312, R313) eine Kommunikation zwischen den Kommunikationsteilnehmern (6-8) nicht beeinflusst.

# FIG 1
( Stand der Technik )

FIG 2
( Stand der Technik )

EP 1 898 287 A1

# FIG 3

EP 1 898 287 A1

FIG 4

Leitungsanfang
0m

Leitungsende
2000m

EP 1 898 287 A1

**EP 1 898 287 A1**

<table>
<tr><td colspan="4">**Europäisches Patentamt**    **EUROPÄISCHER RECHERCHENBERICHT**</td><td>**Nummer der Anmeldung**<br>EP 06 01 8582</td></tr>
</table>

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2006/000585 A (SIEMENS AG [DE]; INDEFREY KLAUS [DE]; SCHIFF ANDREAS [DE]) 5. Januar 2006 (2006-01-05) * das ganze Dokument * ----- | 1-4 | INV. G05B19/418 |
| A | DE 197 10 137 A1 (BIHL JOCHEN [DE]; WIEDEMANN BERNHARD [DE]) 30. Oktober 1997 (1997-10-30) * das ganze Dokument * ----- | | |
| A | EP 1 312 991 A2 (BIHL & WIEDEMANN GMBH [DE]) 21. Mai 2003 (2003-05-21) * Spalte 14, Zeile 30 - Spalte 15, Zeile 15; Abbildung 2 * ----- | | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 30. Januar 2007 | Kuntz, Jean-Marc |

EPO FORM 1503 03.82 (P04C03)

**EP 1 898 287 A1**

**ANHANG ZUM EUROPÄISCHEN RECHERCHENBERICHT**
**ÜBER DIE EUROPÄISCHE PATENTANMELDUNG NR.**

EP 06 01 8582

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2007

| Im Recherchenbericht angeführtes Patentdokument | | Datum der Veröffentlichung | Mitglied(er) der Patentfamilie | Datum der Veröffentlichung |
|---|---|---|---|---|
| WO 2006000585 | A | 05-01-2006 | DE 102004030767 A1 | 19-01-2006 |
| DE 19710137 | A1 | 30-10-1997 | KEINE | |
| EP 1312991 | A2 | 21-05-2003 | DE 10253566 A1 | 28-05-2003 |

EPO FORM P0461

Für nähere Einzelheiten zu diesem Anhang : siehe Amtsblatt des Europäischen Patentamts, Nr.12/82

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202004004637
- WO 2006000585 A1
- WO 200600585 A1
- WO 2006000585 A

**In der Beschreibung aufgeführte Nicht-Patentliteratur**

- ASI - das Aktuator-Sensor-Interface für die Automation. Hansa-Verlag, 1994